# EUROPÄISCHE PATENTANMELDUNG

(11) **EP 4 282 255 A1**
(43) Veröffentlichungstag der Anmeldung: **29.11.2023**
(21) Anmeldenummer: 23164217.4
(22) Anmeldetag: 27.03.2023
(51) Int. Cl.: A01G 9/02, A01G 27/02

(54) **DRAINAGEEINSATZ FÜR BLUMENTÖPFE**

(30) Priorität: 24.05.2022 DE 202022001245 U
(71) Anmelder: Meißner, Eva, 25499 Tangstedt (DE)
(72) Erfinder: Meißner, Eva, 25499 Tangstedt (DE)
(74) Vertreter: RGTH

(57) **Zusammenfassung**

Um einen Drainageeinsatz (100) zur Aufnahme von überschüssigem Wasser bereitzustellen, wird vorgeschlagen, dass der Drainageeinsatz (100) zwischen einem Übertopf und einem Blumentopf einsetzbar oder angeordnet ist, oder dass der Drainageeinsatz (100) in Blumentöpfen, zwischen einem Blumentopfboden und einer im Blumentopf angeordneten Erde einsetzbar oder angeordnet ist.

## Beschreibung

### Technisches Gebiet

Die Erfindung betrifft einen Drainageeinsatz zur Aufnahme von überschüssigem Wasser.

### Stand der Technik

Blumentöpfe üblicher Art bieten einen Plastikbehälter, um Ihn mit Erde und einer Pflanze zu befüllen. Sie werden in der Regel in einen Übertopf oder auf einen Untersetzer gestellt.

Um Pflanzen jeglicher Art am Leben zu halten, benötigen Sie Wasser. Staunässe ist ein Problem, weshalb viele Pflanzen eingehen oder nicht artgerecht gedeihen können. Zwar haben übliche Blumentöpfe Löcher in dem Boden, damit Wasser abfließen kann, jedoch sammelt sich dies dann im Übertopf oder Untersetzer, so dass die Pflanze nichtsdestotrotz im Nassen steht und sich Staunässe bildet, was die Pflanze verdirbt. Scherben verstopfen die Löcher nur unnötig. Steine zwischen Topf und Übertopf sind ebenfalls keine optimale Lösung. Sie sorgen für Instabilität und bieten nicht genug Raum, damit das Wasser abfließen kann. Auf dem Markt sind integrierte Drainagesysteme, die fest mit dem Topf verbunden sind, vorhanden. Jedoch sind die integrierten Drainagesysteme an eine bestimmte Topfmarke oder Form des Topfs gebunden und nicht individuell verwendbar.

### Darstellung der Erfindung: Aufgabe, Lösung, Vorteile

Aufgabe der vorliegenden Erfindung ist es, die vorbeschriebenen Probleme aus dem Stand der Technik zu lösen und einen Drainageeinsatz zur Aufnahme von überschüssigem Wasser vorzuschlagen, wodurch Staunässe vermieden werden kann. Erfindungsgemäß ist somit ein Drainageeinsatz gemäß Anspruch 1 vorgesehen, wobei der Drainageeinsatz zwischen einem Übertopf und einem Blumentopf einsetzbar oder angeordnet ist, oder wobei der Drainageeinsatz in Blumentöpfen, zwischen einem Blumentopfboden und einer im Blumentopf angeordneten Erde einsetzbar oder angeordnet ist. In den Unteransprüchen sind bevorzugte Ausführungsformen beschrieben.

Durch das Platzieren des Drainageeinsatzes zwischen Übertopf und dem Blumentopf selbst entsteht ein Abstandshalter. Das Wasser kann abfließen, die Pflanze bekommt eine Luftzufuhr von unten und es besteht keine Gefahr für Staunässe. Die Erde wird nur in dem Maße befeuchtet, in dem es nötig ist, der Rest des Wassers fließt ab.

Man kann die Pflanze nur noch übergießen, wenn die Wassermenge das Volumen des freien Raums zwischen Übertopfboden und Blumentopfboden überschreitet. Durch eine, dem Durchmesser des Topfes angepasst Höhe des Drainageeinsatzes wird dafür gesorgt, dass genügend Raum zum Abfließen des Wassers vorhanden ist.

Der Durchmesser des Drainageeinsatzes kann dem Durchmesser des Übertopfes entsprechen. Die Form orientiert sich vorzugsweise ebenfalls an der Form des Blumentopfes, welche in der Regel kreisförmig oder die Form eines Vielecks, beispielsweise eines Vier- oder Rechtecks bildet. Es obliegt jedoch dem Endverbraucher auch einen kleineren Drainageeinsatz zu verwenden, solange der Blumentopf noch einen stabilen Stand auf dem Drainageeinsatz findet.

Der Rahmen des Drainageeinsatzes wird durch die mindestens eine Außenwand des Drainageeinsatzes gebildet und ist mit Innenwänden beziehungsweise Elementen des Drainageeinsatzes verbunden, damit dieser an Stabilität gewinnt und genügend Aufstellfläche für den Blumentopf bietet.

Vorzugsweise sind die Außenwand sowie die Innenwände starr und fest miteinander verbunden. Des Weiteren sind die Innenwände derart mit der Außenwand und/oder einem Zentrum des Drainageeinsatzes verbunden, dass zum Einen eine Vielzahl von Leerräumen beziehungsweise Aufnahmebereichen zur Aufnahme des ablaufenden Wassers ausgebildet werden und zum Anderen die Stabilität des Drainageeinsatzes erhöht wird. Beispielsweise dadurch die Steifigkeit des Drainageeinsatzes erhöht.

Vorzugweise weist der Drainageeinsatz auf einer Oberfläche eine wasserdurchlässige Membran auf. Die Oberfläche des Drainage-einsatzes wird vorzugsweise durch eine Stirnseite der mindestens einen Außenwand und/oder der Innenwände gebildet.

Nicht jeder platziert seine Pflanzen in Übertöpfe. Um das Problem der Staunässe trotzdem zu beheben, wird auf der Oberfläche des Einsatzes eine wasserdurchlässige Membran angebracht.

Die Größe des Drainageeinsatzes orientiert sich vorzugsweise am Durchmesser des Blumentopfbodens, die Höhe des Drainageeinsatzes wird verhältnismäßig zum Volumen des Topfes angepasst.

Die Membran deckt vorzugsweise die komplette Oberfläche des Drainageeinsatzes ab und wird unter Spannung befestigt. Die Innenwände beziehungsweise Elemente verleihen der Membran weitere Stabilität und Spannung.

Der Drainageeinsatz mit der Membran wird in den leeren Blumentopf auf dessen Innenboden gesetzt. Die Erde und die Pflanze werden nach gärtnerischen Gegebenheiten darauf platziert (eingetopft).

Die Abstandshalterfunktion findet hier ebenfalls ihre Anwendung. So kann der Blumentopf beliebig platziert werden, ohne dass Staunässe zum Problem wird, da das Wasser schon im Topf abgeleitet wird und sich die Nässe nicht im Topf staut. Ein Untersetzer ist hier je nach Standort des Topfes trotzdem empfehlenswert, damit dass abgelaufene Wasser nicht den Untergrund durchnässt.

Vorzugweis weist der Drainageeinsatz eine konische Form auf, wobei eine Fläche einer Oberfläche des Drainageeinsatzes großer als eine Fläche einer Unterfläche des Drainageeinsatzes ist. Das heißt, dass der untere Teil des Drainageeinsatzes schmaler als das obere Teil des Drainageeinsatzes ausgebildet ist, sodass der obere Teil bzw. die Oberfläche des Drainageeinsatzes eine größere Kontaktfläche mit der Erde, gegebenenfalls mit dem Blumentopf hat. Mit anderen Worten ist der Durchmesser beziehungsweise die Breite des Drainageeinsatzes im oberen Bereich größer als im unteren Bereich.

Ferner kann mindestens eine der mehreren Innenwände mindestens eine Vertiefung aufweisen, wobei die Vertiefung entlang einer Höhenrichtung der Innenwand vorgesehen ist. Die Höhenrichtung der Innenwand ist vorzugweise senkrecht zu der Ober- und Unterfläche des Drainageeinsatzes. Beispielweise ist die Vertiefung auf der Stirnseite der mindestens einen Innenwand angeordnet. Insbesondere bevorzugt ist die Vertiefung auf der Unterfläche des Drainageeinsatze angeordnet. Die mindestens eine Vertiefung sorgt dafür, das überflüssiges Wasser sich besser verteilen kann und mehr Leerräume auf der Unterfläche des Drainageeinsatze für das überschüssige Wasser zur Verfügung steht.

Bevorzugterweise weist die mindestens eine Vertiefung eine eckige oder runde Kontur auf. In anderen Worten kann die Höhe der Innenwand mit der mindestens einen Vertiefung an beiden Enden der Innenwand größer als im mittleren Bereich der Innenwand sein.

Eine Oberfläche und/oder eine Unterfläche kann eine ovale Kontur aufweisen. Beispielweise kann ein Querschnitt eines Umfangs der Außerwand oval sein, wobei der Querschnitt des Außerwandumfangs bevorzugterweise senkrecht zu der Höhenrichtung der Drainageeinsatzes angeordnet ist.

Des Weiteren kann die Oberfläche und/oder die Unterfläche eine viereckige oder vieleckige Kontur aufweisen. Ferner weist der Drainageeinsatz vorzugweise eine viereckige oder vieleckige Zwischenwand, die zwischen der Außenwand und einem geometrischen Mittelpunkt des Drainageeinsatzes angeordnet ist, auf. Die viereckige oder vieleckige Zwischenwand bedeutet, dass die Kontur der Zwischenwand viereckig oder vieleckig ist. Die Zwischenwand kann durchgehend entlang einer inneren Seite der Außenwand und beanstandet zur Außenwand des Drainageeinsatzes ausgestaltet werden. Insbesondere verläuft die Zwischenwand vorzugweise parallel zur Außenwand. Die Außenwand und die Zwischenwand können über die mehreren Innenwände miteinander verbunden sein, dadurch wird der Drainageeinsatz stabilisiert und kann seine Strukturfestigkeit nicht verlieren.

Insbesondere ist die Zwischen- und/oder Außenwand des Drainageeinsatzes höhenangebend für den Drainageeinsatz. Das heißt, dass die Höhe der Innenwände geringer als die Höhe der Zwischen- und/oder Außenwand sein kann, für den Fall, dass die Innenwände mindestens eine Vertiefung aufweisen.

Bevorzugterweise ist die Oberfläche des Drainageeinsatzes im Wesentlichen geschlossen und mit Durchbrüchen, insbesondere Löchern versehen. Ferner können die Durchbrüche in unterschiedlicher Form, beispielweise in eckiger, runder, und/oder ovaler Form, und/oder mit unterschiedlichen Größen ausgebildet sein. Besonders bevorzugterweise weist die Oberfläche eine Vielzahl von Durchbrüchen auf.

Zudem kann es vorteilhaft sein, dass an einer unteren Kante einer Außenwand des Drainageeinsatzes mindestens eine Ausnehmung angeordnet ist. Die mindestens eine Ausnehmung kann eine Aussparung oder eine Aushöhlung sein. Vorzugweise ist die Ausnehmung auf der Unterfläche des Drainageeinsatzes und entlang des Umfangs der Außenwand angeordnet. Die Anzahl der Ausnehmungen kann aber auch mehr als eins sein. Die mehreren Ausnehmungen sind bevorzugterweise in gleichen Abständen entlang dem Gesamtumfang der Außenwand angeordnet. Ferner können die Ausnehmungen in unterschiedlicher Form, beispielweise in eckiger, und/oder halbrunder/runder, und/oder halbovaler/ovaler Form, und/oder mit unterschiedlichen Größen ausgebildet sein. Die Ausnehmung dient dazu, eine bessere Verteilung des überflüssigen Wassers auf der gesamten Fläche des Bodens des Übertopfes zu gewährleisten.

Die mindestens eine Ausnehmung kann beispielweise auch an einer oberen Kante einer Außenwand des Drainageeinsatzes angeordnet werden, wenn der Drainageeinsatz keine wasserdurchlässige Membran auf der Oberfläche aufweist.

Ferner kann die Oberfläche des Drainageeinsatzes an mindestens einer Stelle, die sich zwischen den Innenwänden befindet, abschnittsweise geschlossen sein. Das Material zum Verschließen der Stelle erstreckt sich vorzugweise nicht über die gesamte Höhe des Drainageeinsatzes, sodass der geschlossene Abschnitt auf der Oberfläche des Drainageeinsatzes im Wesentlichen als ein Deckel ausgebildet ist.

Insbesondere kann ein Logo auf dem geschlossenen Abschnitt der Oberfläche des Drainageeinsatzes und/oder in einen äußeren Rand der Außenwand des Drainageeinsatzes eingraviert werden.

### Kurze Beschreibung der Figuren

Ein Ausführungsbeispiel der Erfindung wird anhand der Figuren 1 bis 7 erläutert. Die Figuren bilden ein Muster und Grundkonstrukt, um die Erfindung zu veranschaulichen.
- Fig. 1: beispielsweise Ansicht von oben auf den Drainageeinsatz,
- Fig. 2: beispielsweise Dreidimensionale Perspektive auf den Drainageeinsatz. Verbindende Elemente/Innenwände werden deutlich,
- Fig. 3: beispielsweise Ansicht Querschnitt,
- Fig. 4a und 4b: zwei beispielhafte Formen von Vertiefungen an den Innenwänden des Drainageeinsatzes,
- Fig. 5: eine weitere Ausführungsform des Drainageeinsatzes,
- Fig. 6a und 6b: zwei beispielhafte Formen von Ausnehmungen an der unteren Kante der Außenwand des Drainageeinsatzes,
- Fig. 7: ein Drainageeinsatz mit teilweise geschlossenen Abschnitten auf der Oberfläche.

### Ausführliche Beschreibung der Figuren

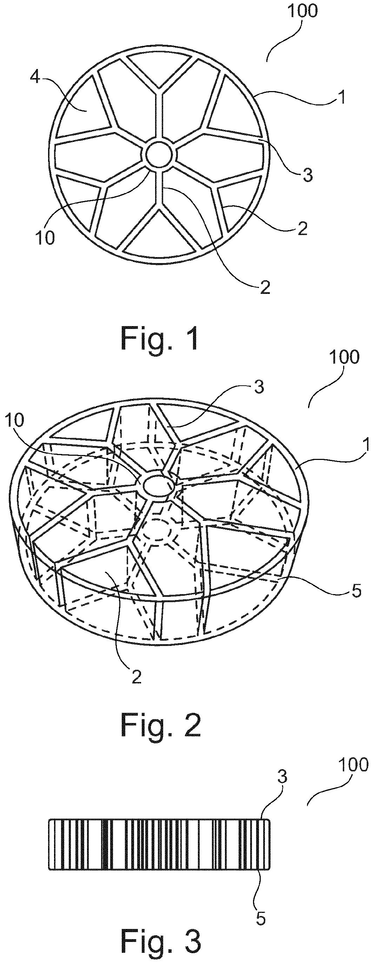

Fig. 1 und Fig. 2 zeigen einen Drainageeinsatz 100, welcher in der perspektiven Ansicht im Wesentlich zylinderförmig ist. Die Außenwand 1 ist rund, das heißt die Kontur der Außenwand 1 hat eine runde Form. Die mehreren Innenwände 2 sind miteinander und mit einer inneren Fläche der Außenwand 1 sowie auch mit einer äußeren Fläche der Zwischenwand 10 verbunden. An den Verbindungsstellen bilden die Innenwände 2 zueinander sowie aber auch die Innenwand 2 mit der Außenwand 1 / der Zwischenwand 10 Winkel aus. Zwischen den Innenwänden 2 sind Leerräume 4 ausgebildet, die dafür sorgen, dass überschüssiges Wasser von oben nach unten abfließen kann.

Aus der Ansicht von oben auf den Drainageeinsatz 100 ist es deutlich, dass die Zwischenwand 10 zwischen der Außenwand 1 und einem geometrischen Mittelpunkt / Kreismittelpunkt des Drainageeinsatzes 100 angeordnet ist. Die Zwischenwand 10 ist als ein innerer Ring, der parallel und beabstandet zu der ringförmigen Außenwand 1 verläuft, ausgebildet. die Außenwand 1 und die Zwischenwand 10 haben denselben geometrischen Mittelpunkt / Kreismittelpunkt.

In dem in Fig. 2 gezeigten Beispiel ist die Höhe der Außenwand 1 gleich wie die Höhe der Innerwände 2, sodass eine ebene beziehungsweise unterbrechungsfreie Oberfläche 3 und Unterfläche 5 des Drainageeinsatzes 100 ausgebildet wird. Die Oberfläche 3 ist mit den Blumentöpfen (hier nicht dargestellt) in Kontakt, wenn der Drainageeinsatz 100 zwischen dem Übertopf (hier nicht dargestellt) und dem Blumentopf angeordnet ist, beziehungsweise mit der Erde in Kontakt, wenn der Drainageeinsatz 100 zwischen einem Blumentopf und der darin angeordneten Erde angeordnet ist.

In der Fig. 3 ist ein Querschnitt durch den Drainageeinsatz 100 entlang der Höhenrichtung der Außenwand 1 / Innenwände 2 dargestellt. Die Oberfläche 3 und die Unterfläche 5 des Drainageeinsatzes 100 sind auch in dem Querschnitt sichtbar. Des Weiteren sind alle Innenwände 2 in vereinfachter Weise als durchlaufende Linien zwischen der Oberfläche 3 und der Unterfläche 5 dargestellt. Dadurch wird deutlich, dass die Innenwände 2, beziehungsweise die Höhenrichtung der Innenwände 2 / Außenwand 1, senkrecht zu der Ober- und Unterfläche 3, 5 sind.

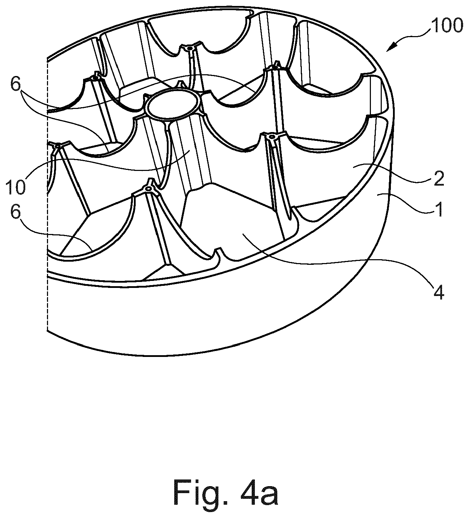

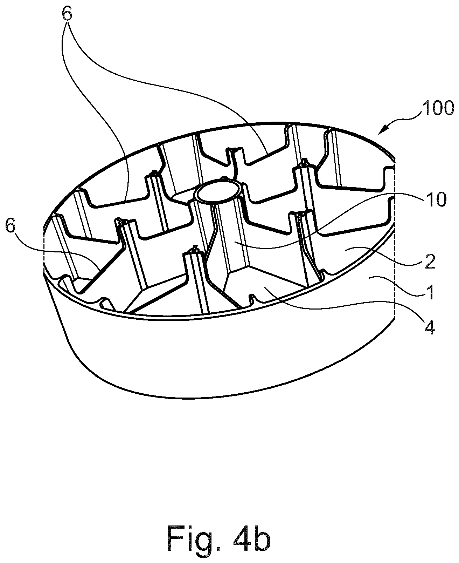

Fig. 4a zeigt eine weitere beispielhafte Ausführungsform des Drainageeinsatzes 100, indem bogenförmige Vertiefungen 6 in den Stirnseiten der Innenwände 2 und auf der Unterfläche 5 angeordnet sind. Fig. 4b stellt eine alternative Konturform der Vertiefungen 6 dar, welche im Wesentlichen eckig ist. Die beiden alternativen Konturformen könnten auch miteinander kombiniert werden. Durch die Vertiefungen 6, wird die Kontaktfläche der Stirnseiten der Innenwände 2 und der Unterfläche 5 deutlich reduziert. In beiden Fälle sind die Zwischenwand 10 und die Außenwand 1 höhenangebend für den Drainageeinsatz 100, da die Höhe der Innenwände 2 zumindest abschnittsweise geringer als die Höhe der Zwischenwand 10 und die der Außenwand 1 ist.

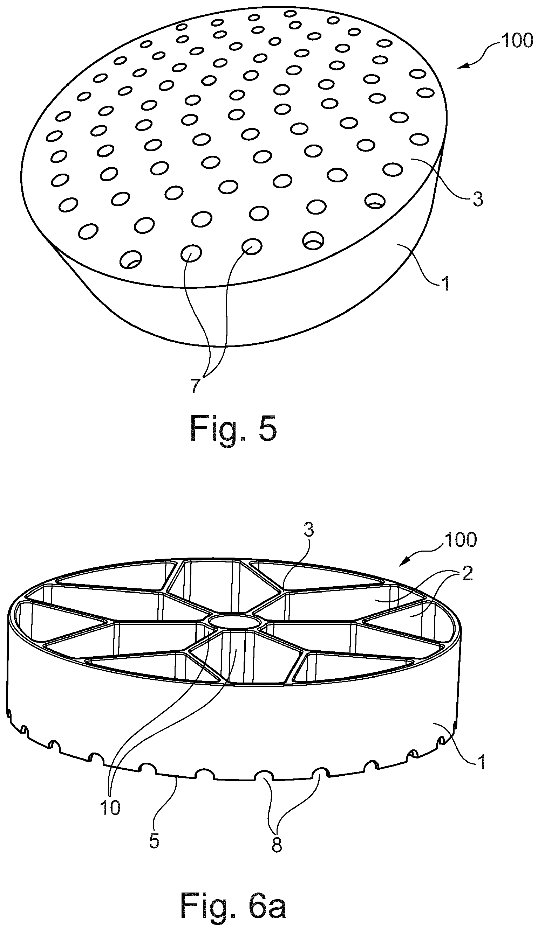

Ein weiteres Beispiel des Drainageeinsatzes 100 ist in der Fig. 5 gezeigt. In dieser Ausführungsform ist die Oberfläche 3 des Drainageeinsatzes 100 im Wesentlichen geschlossen und mit einer Vielzahl von kreisförmigen Löchern 7 versehen. Die Löcher 7 sind hier im Wesentlichen gelichverteilt auf der Oberfläche 3 angeordnet.

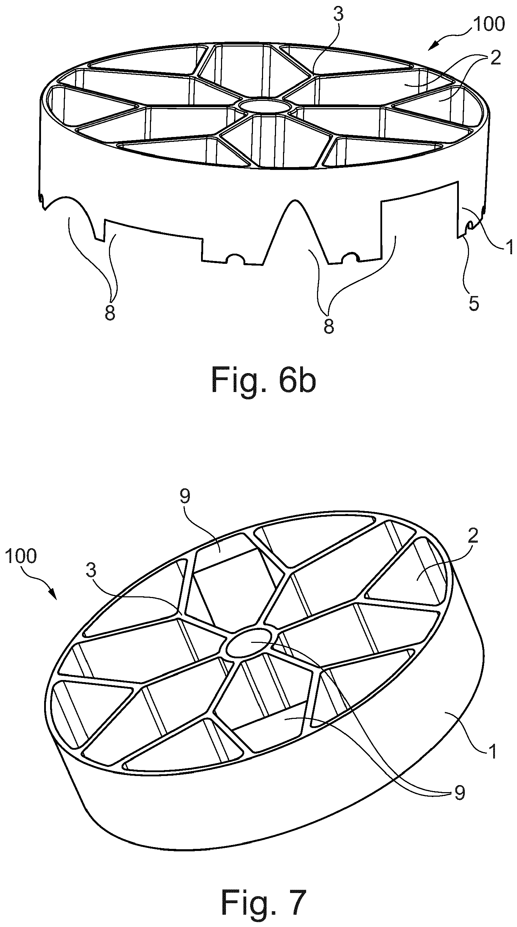

Wie in den Fig. 6a und 6b beispielhaft dargestellt, sind Ausnehmungen 8 an der unteren Kante der Außenwand 1 des Drainageeinsatzes 100 angeordnet. In der Fig. 6a sind die Ausnehmungen 8 im Wesentlichen halbrund und mit geleichen Abständen entlang der ganzen Kante versehen. Alternativ oder kombiniert können die Ausnehmungen 8 in anderen Formen ausgebildet sein. Fig. 6b zeigt beispielhaft viereckige, dreieckige und bogenförmige Ausnehmungen 8.

Fig. 7 zeigt beispielweise einen Drainageeinsatz 100, auf dessen Oberfläche 3 einige Abschnitte 9 zwischen den Innenwänden 2 geschlossen ausgebildet sind. Die geschlossenen Abschnitte 9 auf der Oberfläche 3 weisen eine geringe Höhe/Dicke auf, die sich nicht über die ganze Höhe des Drainageeinsatzes 100 erstrecken. In einer perspektiven Ansicht (hier nicht dargestellt) ist deshalb der geschlossene Abschnitt 9 als dünner Deckel/Schicht ausgebildet.

### Bezugszeichenliste

- 1: Außenwand
- 2: Innenwände
- 3: Oberfläche
- 4: Leerraum
- 5: Unterfläche
- 6: Vertiefung
- 7: Löcher
- 8: Ausnehmungen
- 9: geschlossener Abschnitt auf der Oberfläche
- 10: Zwischenwand

## Patentansprüche

1. Drainageeinsatz (100) zur Aufnahme von überschüssigem Wasser, wobei der Drainageeinsatz (100) zwischen einem Übertopf und einem Blumentopf einsetzbar oder angeordnet ist, oder wobei der Drainageeinsatz (100) in Blumentöpfen zwischen einem Blumentopfboden und einer im Blumentopf angeordneten Erde einsetzbar oder angeordnet ist.

2. Drainageeinsatz (100) nach Anspruch 1,
**gekennzeichnet dadurch, dass** der Drainageeinsatz (100) mindestens eine Außenwand (1) aufweist, wobei die mindestens eine Außenwand (1) eine Dicke von mindestens 1 mm und eine Höhe von min. 0,5 cm aufweist.

3. Drainageeinsatz (100) nach Anspruch 2,
**dadurch gekennzeichnet, dass** der Drainageeinsatz (100) mehrere Innenwände (2) aufweist, welche innerhalb der mindestens einen Außenwand (1) angeordnet sind, wobei die Innenwände (2) vorzugsweise eine Dicke von mindestens 1 mm aufweisen, wobei die Innenwände (2) vorzugsweise im Wesentlichen dieselbe Höhe wie die mindestens eine Außenwand (1) aufweisen.

4. Drainageeinsatz (100) nach Anspruch 2 und 3,
**dadurch gekennzeichnet, dass** zwischen der mindestens einen Außenwand (1) und den Innenwänden (2) und/oder zwischen den Innenwänden (2) mindestens ein Leerraum (4) zur Aufnahme von ablaufendem Wasser angeordnet ist.

5. Drainageeinsatz (100) nach einem der Ansprüche 2 bis 4,
**dadurch gekennzeichnet, dass** die mindestens eine Außenwand (1) und eine Anzahl der Innenwände (2) untrennbar miteinander verbunden sind.

6. Drainageeinsatz (100) nach einem der vorhergehenden Ansprüchen,
**dadurch gekennzeichnet, dass** der Drainageeinsatz (100) nach unten hin, beziehungsweise eine Unterfläche (5) zumindest abschnittsweise offen ist und keine geschlossene Bodenfläche aufweist.

7. Drainageeinsatz (100) nach einem der vorhergehenden Ansprüchen, dass wenn der Drainageeinsatz (100) in Blumentöpfen, zwischen einem Blumentopfboden und einer im Blumentopf angeordneten Erde einsetzbar oder angeordnet ist, ist eine wasserdurchlässige Membran auf einer Oberfläche (3) des Drainageeinsatzes (100) angeordnet, wobei die Membran vorzugsweise gespannt ist.

8. Drainageeinsatz (100) nach einem der vorhergehenden Ansprüchen,
**dadurch gekennzeichnet, dass** der Drainageeinsatz (100) eine konische Form aufweist, wobei eine Fläche einer Oberfläche (3) großer als eine Fläche einer Unterfläche (5) ist.

9. Drainageeinsatz (100) nach einem der Ansprüche 3 bis 8,
**dadurch gekennzeichnet, dass** mindestens eine der mehreren Innenwände (2) mindestens eine Vertiefung (6) aufweist, wobei die Vertiefung (6) entlang einer Höhenrichtung der Innenwand (2) vorgesehen ist.

10. Drainageeinsatz (100) nach Anspruch 9,
**dadurch gekennzeichnet, dass** die mindestens eine Vertiefung (6) eine eckige oder runde Kontur aufweist.

11. Drainageeinsatz (100) nach einem der vorhergehenden Ansprüchen,
**dadurch gekennzeichnet, dass** eine Oberfläche (3) und/oder eine Unterfläche (5) eine ovale Kontur aufweist.

12. Drainageeinsatz (100) nach einem der vorhergehenden Ansprüchen,
**dadurch gekennzeichnet, dass** eine Oberfläche (3) und/oder eine Unterfläche (5) eine viereckige oder vieleckige Kontur aufweist, wobei die Oberfläche (3) und/oder die Unterfläche (5) ferner vorzugweise eine viereckige oder vieleckige Zwischenwand (10) aufweist.

13. Drainageeinsatz (100) nach Anspruch 11 oder Anspruch 12,
**dadurch gekennzeichnet, dass** die Zwischenwand (10) und/oder Außenwand (1) höhenangebend für den Drainageeinsatz (100) ist.

14. Drainageeinsatz (100) nach einem der vorhergehenden Ansprüchen,
**dadurch gekennzeichnet, dass** die Oberfläche (3) im Wesentlichen geschlossen ist und Durchbrüche, insbesondere Löcher (7), aufweist.

15. Drainageeinsatz (100) nach einem der vorhergehenden Ansprüchen,
**dadurch gekennzeichnet, dass** an einer unteren Kante einer Außenwand (1) des Drainageeinsatzes (100) mindestens eine Ausnehmung (8) angeordnet ist.
